Europäisches Patentamt

European Patent Office

Office européen des brevets

(11) Numéro de publication: **0 152 633**
A2

# (12) DEMANDE DE BREVET EUROPEEN

(21) Numéro de dépôt: **84116500.4**

(22) Date de dépôt: **29.12.84**

(51) Int. Cl.⁴: **G 03 B 25/00**

(30) Priorité: **06.02.84 BE 212339**

(71) Demandeur: **Staar Development Company -S.A., 479 Avenue Louise, B-1050 Bruxelles (BE)**

(72) Inventeur: **Staar, Marcel Jules Hélène, 479 Avenue Louise, B-1050 Bruxelles (BE)**

(74) Mandataire: **Patentanwälte Dipl.-Ing. Splanemann Dipl.-Chem. Dr. B. Reitzner, Tal 13, D-8000 München 2 (DE)**

(43) Date de publication de la demande: **28.08.85 Bulletin 85/35**

(84) Etats contractants désignés: **DE FR GB IT**

(54) **Appareil de visualisation directe de vues cinématographiques stéréoscopiques sonorisées.**

(57) Système d'appareil de visualisation de vues cinématographiques caractérisé en ce que des moyens sont prévus pour placer, entre le film portant les vues cinématographiques et des fenêtres de visualisation, des moyens optiques mobiles, et des moyens sont prévus pour synchroniser les éléments, et des moyens sont prévus pour adapter les moyens optiques les positions des vues stéréoscopiques sur le film.

EP 0 152 633 A2

0152633

STAAR DEVELOPMENT COMPANY S.A. - BRUXELLES - BELGIQUE.

APPAREIL DE VISUALISATION DIRECTE DE VUES CINEMATOGRAPHIQUES
STEREOSCOPIQUES SONORISEES.

Dans des appareils pour une visualisation cinématographique directe et principalement si l'on désire réaliser
des appareils individuels sonores, il est particulièrement
intéressant de pouvoir disposer d'un système présentant un niveau de bruit mécanique très faible afin de ne pas altérer la
quiétude de l'utilisateur et de ne pas perturber la sonorisation.
Ces appareils, particulièrement pour une visualisation et une audition stéréoscopiques, doivent être précis,
fiables, compact et malgré cela, très économiques à fabriquer.
Le but de la présente invention est de proposer
un système cinématographique sonorisé, stéréoscopique, très
performant, compact et économique à réaliser.
Pour réaliser ce but, on propose essentiellement
des moyens optiques mobiles placés entre le film et des fenêtres
de visualisation directe, des moyens sont prévus pour entraîner solidairement, à vitesse uniforme constante, le film portant les vues et les enregistrements stéréoscopiques, et les
moyens optiques mobiles.
Il est prévu d'utiliser des films montés, en
boucle fermée ou se déroulant de bobine à bobine, dans des
cassettes amovibles.

Des moyens sont prévus pour adapter les moyens optiques et les positions des vues stéréoscopiques sur le film.

Afin de bien faire comprendre l'invention, on donnera ci-après des exemples non-limitatifs.

Dans la FIG. I on donne une vue en plan d'un film I portant des vues cinématographiques 2.

Ce film est entraîné dans le sens de la flèche 3, par une roue 4 dont les dents 5 s'engagent dans les perforations 6 du film.

Cette roue 4 est entraînée elle-même en rotation uniforme et continue par un système moteur classique, non représenté.

Un engrenage 7 est solidaire de la roue 4 et entraîne en rotation, dans le sens des flèches 8, des engrenages 9 et IO faisant partie de cuvettes II et I2, formées d'une certaine quantité de loupes I3 sur leur périphérie.

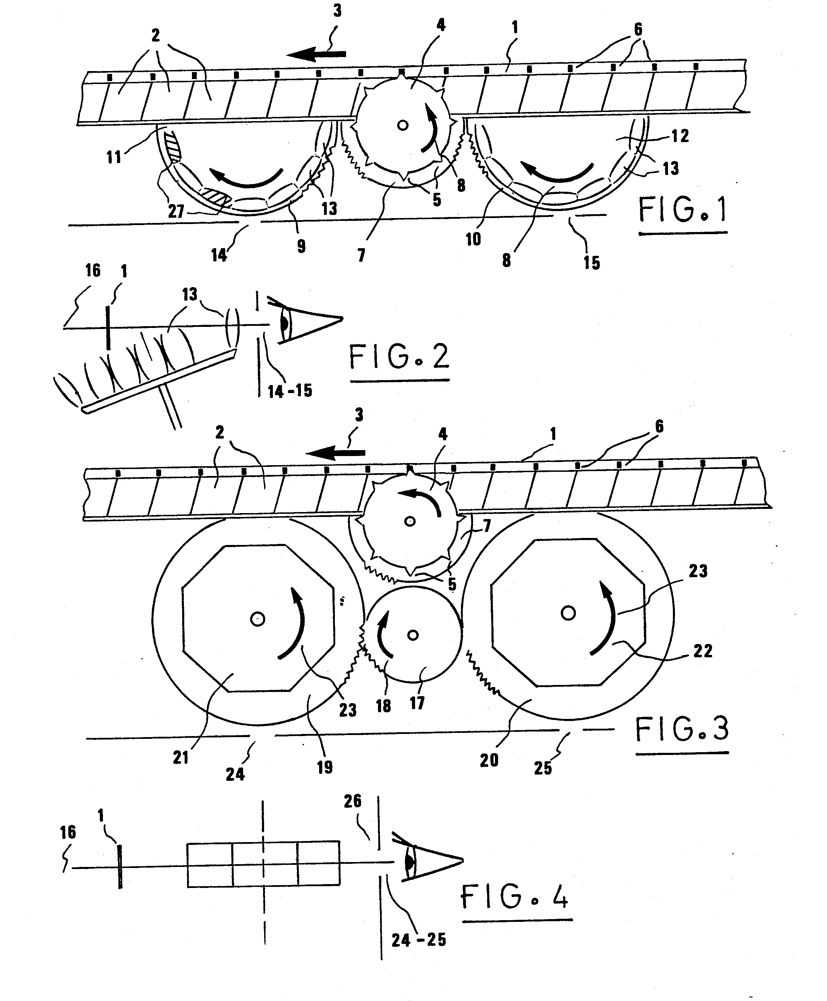

La FIG. 2 donne une coupe dans l'axe de vision.

Les cuvettes tournent dans un plan incliné afin de présenter continuellement la série de loupes entre le film et les fenêtres de visualisation I4-I5.

L'angle de l'axe des loupes, par rapport à la base de la cuvette est choisi de façon à réaliser un plan de défilement des loupes, sensiblement le même que le plan de défilement du film.

Les caractéristiques optiques et physiques des loupes sont naturellement adaptées aux dimensions et positions des vues propres au type de film choisi de façon à ce que le défilement total d'une loupe corresponde chaque fois au défilement total d'une vue du film.

Tous les éléments se mouvant solidairement, le synchronisme reste absolu.

Une source de lumière artificielle ou ambiante I6

2

éclaire la vue du film qui est visualisée par les fenêtres
I4-I5, au travers d'une des loupes I3 qui procure ainsi une
image virtuelle plus grande que celle du film.

La loupe se déplace au même rythme que le défilement du film.

La loupe se déplaçant en rapport avec le défilement du film, modifie continuellement les angles d'entrée
et de sortie des rayons lumineux réalisant une image virtuelle
fixe malgré le défilement continu des vues portées par le film.

La FIG. 3 montre que l'engrenage 7 peut entraîner solidairement un engrenage I7, dans le sens de la flèche I8,
lequel entraîne à son tour des engrenages I9-20 faisant partie
de prismes 2I-22, par exemple octogonaux, tournant dans le
sens des flêches 23.

La coupe de la FIG. 4 montre que les prismes
placés entre le film et les fenêtres de visualisation 24-25,
modifient en tournant, l'angle d'entrée et de sortie des rayons
lumineux afin de faire apparaître une image fixe.

Une loupe fixe 26 peut, par exemple, être placée
à proximité des fenêtres 24-25 pour procurer une image virtuelle
plus grande.

Le film est placé dans une cassette amovible,
non représentée parce que très classique et très connu dans le
domaine des films optiques et rubans d'enregistrements magnétiques.

Dans ces cassettes, le film est monté en boucle
fermée qui peut donc se dérouler de façon continue, sans fin.

Dans d'autres cassettes, le film se déroule d'une
bobine sur une autre, en va-et-vient, de façon automatique, ou
aidé par des systèmes de rebobinages.

Dans ces cassettes, des fenêtres sont prévues
pour accéder au film afin de l'entraîner et pour lire les
informations qu'il porte lorsqu'on l'accouple avec un appareil.

Dans les exemples des FIG. I à 6, on suppose que la partie de film représentée est celle qui apparaît dans la fenêtre de la cassette.

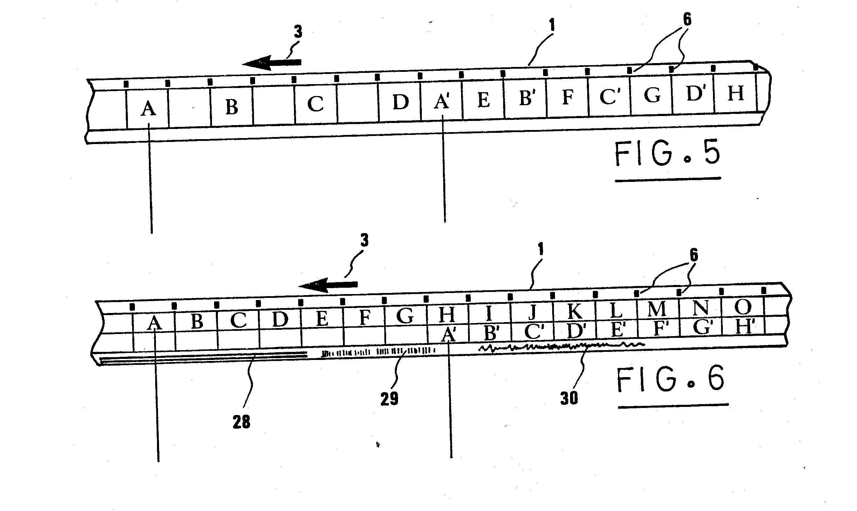

L'exemple de la FIG. 5, montre comment on peut imbriquer les unes à la suite des autres, les vues stéréoscopiques destinées à l'oeil gauche et à l'oeil droit du spectateur.

On prévoit, pour cet exemple, une occultation 27 d'une sur deux, des loupes formant les cuvettes II et I2, de façon à ce que seules les vues A-B-C-D-E-F etc...., puissent être visualisées par l'oeil gauche.

Au moment ou l'oeil gauche voit l'image A, l'oeil droit peut voir l'image A'. Puis, l'occultation de la loupe suivante des cuvettes II et I2 empêche l'oeil gauche et l'oeil droit de voir les vues immédiatement suivantes qui ne leur sont pas destinées, et, les loupes suivantes, actives de nouveau, permettent de voir respectivement les vues B et B', et ainsi de suite.

Pour l'exemple des FIG. 3 et 4, il faut prévoir l'occultation aussi, pour la disposition de vues de la FIG. 5, de certaines des paires de faces parallèles des prismes, cad, une sur deux.

Pour l'exemple de la FIG. 6, les vues sont disposées de chaque coté du centre horizontal du film, et sont visualisées les unes à la suite des autres.

L'oeil gauche percevra les vues A-B-C-D-E-F etc...., et l'oeil droit percevra les vues A'-B'-C'-D'-E' etc...

Les cuvettes II-I2, formées par les loupes, ainsi que les prismes 2I-22, peuvent être positionnés de façon légèrement différentes afin de ramener dans le centre des fenêtres de visualisation I4-I5 et 24-25, les vues décalées sur le film.

4

La correction de centrage vertical, peut aussi être, par exemple, obtenue en positionnant la loupe 26 légèrement plus haute ou plus basse afin de donner à chaque oeil la série de vues qui lui est destinée.

Les enregistrements sonores peuvent être réalisés sur une ou plusieurs pistes prévues sur le film, par exemple, des pistes magnétiques 28, des pistes optiques 29 ou des sillons 30.

Le système proposé réalise un entraînement d'un niveau de bruit mécanique très bas, et le fait que le film avance en un mouvement continu, uniforme, permet une lecture directe des enregistrements.

0152633

<u>REVENDICATIONS</u>

I - Système d'appareil de visualisation de vues cinématographiques employant des films montés dans des cassettes amovibles, caractérisé en ce que des moyens sont prévus pour placer entre le film portant les vues cinématographiques défilant à vitesse uniforme constante et des fenêtres de visualisation, des moyens optiques mobiles, et des moyens sont prévus pour entraîner ceux-ci, solidairement en synchronisme, avec le film; des moyens sont prévus pour pourvoir le film d'une ou de plusieurs pistes sonores ou d'informations, et des moyens sont prévus pour adapter les moyens optiques et les positions des vues stéréoscopiques sur le film.

2 - Suivant la revendication I, caractérisé en ce que les moyens optiques mobiles placés entre le film et les fenêtres de visualisation soient constitués par des loupes, le défilement total d'une loupe correspondant au défilement total d'une vue sur le film.

3 - Suivant les revendications I-2, caractérisé en ce qu'une multitude de loupes soient injectés en matière plastique et forment une pièce en cuvette dont le bord périphérique présente un angle permettant le défilement des loupes dans un plan sensiblement le même que celui du film, alors que la cuvette tourne dans un plan différent, afin de ne présenter qu'un seul bord de la cuvette, formant les loupes, entre le film et les fenêtres de visualisation.

4 - Suivant les revendications I-3, caractérisé en ce qu'une loupe se présente seulement toutes les deux vues de façon à pouvoir réserver une série de vues à un oeil du spectateur, et les vues intermédiaires à l'autre oeil.

5 - Suivant la revendication I, caractérisé en ce ce que les moyens optiques mobiles placés entre le film et les fenêtres de visualisation soient constitués par des prismes, le défilement total d'une paire de faces parallèles de prisme correspondant chaque fois au défilement total d'une vue du film.

6 - Suivant les revendications I-5, caractérisé en ce qu'une paire de faces parallèles de prisme se présente seulement toutes les deux vues de film, de façon à pouvoir réserver une série de vues à un oeil du spectateur, et les vues intermédiaires à l'autre oeil.

7 - Suivant les revendications I à 6, caractérisé en ce que les moyens prévus pour entraîner le film et les moyens optiques mobiles à vitesse uniforme constante soient réalisés par une roue dont les dents s'engagent d'une part dans les perforations du film, et d'autre part, s'accouple solidairement, par engrenage, aux moyens optiques mobiles.

8 - Suivant les revendications I à 7, caractérisé en ce que les moyens prévus pour adapter les moyens optiques et les positions des vues stéréoscopiques sur le film soient réalisés en, d'une part, alternant des vues stéréoscopiques décalées, gauches/ droites sur le film, et d'autre part, en rendant actif qu'une loupe sur deux .(Par exemple par l'occultation d'un emplacement de loupe sur deux.)

9 - Suivant les revendications I à 7, caractérisé en ce que les moyens prévus pour adapter les moyens optiques et les positions des vues stéréoscopiques sur le film soient réalisés en, d'une part, alternant des vues stéréoscopiques décalées, gauches/ droites sur le film, et d'autre part, en rendant actif qu'une paire de faces parallèles de prisme sur deux. (Par exemple par l'occultation d'une paire de faces parallèles sur deux.)

IO - Suivant les revendications I à 9, caractérisé en ce que les vues stéréoscopiques sont disposées de chaque coté du centre horizontal du film, un côté portant toutes les vues, les unes à la suite des autres, destinées à un oeil, et l'autre côté portant toutes les vues destinées à l'autre oeil.

II - Suivant les revendications I à IO, caractérisé en ce que les vues sont disposées de part et d'autre
du centre horizontal du film et puissent être centrées dans les
fenêtres de visualisation en positionnant différemment les
moyens optiques mobiles destinés à un oeil par rapport à
l'autre, symétriquement l'un à l'inverse de l'autre.

I2 - Suivant les revendications I à IO, caractérisé en ce que le centrage dans les fenêtres de visualisation,
des vues décalées de part et d'autre du centre horizontal du
film, soit obtenu par des loupes fixes, placées entre le film
et les fenêtres de visualisation, légèrement décalées verticalement, celle destinée à l'oeil droit et celle destinée à
l'oeil gauche, symétriquement, l'une à l'inverse de l'autre.

1/2

0152633

FIG.1

FIG.2

FIG.3

FIG.4

0152633

3   1   6

| A | | B | | C | | D | A' | E | B' | F | C' | G | D' | H |

FIG.5

3   1   6

| A | B | C | D | E | F | G | H | I | J | K | L | M | N | O |
| | | | | | | A' | B' | C' | D' | E' | F' | G' | H' |

28   29   30

FIG.6